# EUROPÄISCHE PATENTSCHRIFT

(11) **EP 4 162 781 B1**
(45) Veröffentlichungstag und Bekanntmachung des Hinweises auf die Patenterteilung: **26.02.2025**
(21) Anmeldenummer: 22195174.2
(22) Anmeldetag: 12.09.2022
(51) Int. Cl.: A01B 59/06, A01B 59/00

(54) **DREIPUNKT-KRAFTHEBER EINES LANDWIRTSCHAFTLICHEN TRAKTORS**
THREE-POINT LINKAGE OF AN AGRICULTURAL TRACTOR
ATTELAGE TROIS-POINTS D'UN TRACTEUR AGRICOLE

(30) Priorität: 06.10.2021 DE 102021125936
(43) Veröffentlichungstag der Anmeldung: 12.04.2023
(73) Patentinhaber: Deere & Company, Moline, IL 61265 (US)
(72) Erfinder: HINGNE, ABHIJIT, 68163 Mannheim (DE); HEITLINGER, MARTIN, 68163 Mannheim (DE); SCHIBEL, ACHIM, 68163 Mannheim (DE); PATINO, MARIO, 68163 Mannheim (DE)
(74) Vertreter: Dehnhardt, Florian Christopher

(56) Entgegenhaltungen:
- EP-A1- 2 556 736
- EP-B1- 1 018 292
- EP-B1- 1 111 984
- EP-B1- 2 870 842
- DE-A1- 10 251 234
- DE-A1- 2 749 311

## Beschreibung

Die Erfindung betrifft einen Dreipunkt-Kraftheber eines landwirtschaftlichen Traktors mit einem Unterlenker, umfassend eine an einem ersten Unterlenkerende angeordnete erste Kupplungseinrichtung zur Anbringung einer Anbaugeräteschnittstelle und eine an einem zweiten Unterlenkerende angeordnete zweite Kupplungseinrichtung zur Anbringung einer traktorseitigen Anlenkstelle des Dreipunkt-Krafthebers.

Derartige Unterlenker sind z.B. aus den Dokumenten DE 27 49 311 A1, EP 1 111 984 B1 und DE 102 51 234 A1 bekannt und finden an Dreipunkt-Krafthebern landwirtschaftlicher Traktoren in den unterschiedlichsten Bauformen Verwendung, wobei üblicherweise an einem traktorseitig zu befestigenden Unterlenkerende ein Lagerauge ausgebildet ist, in dem eine mit einer zentralen Bohrung versehene Lagerkugel gelenkig aufgenommen ist. Die zentrale Bohrung dient der Aufnahme eines Achsstummels, der an einer Stirnseite eines im Bereich eines Hinterachsdifferentialgehäuses angeflanschten Trägerelements hervorsteht. Eine Demontage des Unterlenkers, beispielsweise zur Erhöhung der Seitenfreiheit einer Zugdeichsel bei Transportarbeiten mit einem Anhänger oder dergleichen, ist mit vergleichsweise hohem Aufwand verbunden.

Ein Dreipunkt-Kraftheber gemäß dem Oberbegriff des Patentanspruchs 1 ist aus dem Dokument EP 2 870 842 B1 bekannt. 1

Es ist daher Aufgabe der vorliegenden Erfindung, einen Dreipunkt-Kraftheber der eingangs genannten Bauart bezüglich einer verbesserten Handhabung weiterzubilden.

Diese Aufgabe wird durch einen Dreipunkt-Kraftheber mit den Merkmalen des Patentanspruchs 1 gelöst.

Der erfindungsgemäße Dreipunkt-Kraftheber eines landwirtschaftlichen Traktors mit einem Unterlenker umfasst eine an einem ersten Unterlenkerende angeordnete erste Kupplungseinrichtung zur Anbringung einer Anbaugeräteschnittstelle und eine an einem zweiten Unterlenkerende angeordnete zweite Kupplungseinrichtung zur Anbringung einer traktorseitigen Anlenkstelle des Dreipunkt-Krafthebers. Die zweite Kupplungseinrichtung weist einen Kupplungskörper mit einem Fanghaken und einem Verschlussmechanismus auf, wobei der Verschlussmechanismus der lösbaren Arretierung einer der traktorseitigen Anlenkstelle zugeordneten Kupplungskugel innerhalb des Fanghakens dient.

Auf diese Weise ist eine rasche und unkomplizierte Demontage des Unterlenkers vom Dreipunkt-Kraftheber möglich.

Vorteilhafte Weiterbildungen des erfindungsgemäßen Dreipunkt-Krafthebers eines landwirtschaftlichen Traktors mit einem Unterlenker gehen aus den Unteransprüchen 2 bis 8 hervor.

Vorzugsweise bildet der Fanghaken einen zur formschlüssigen Aufnahme der Kupplungskugel vorgesehenen Befestigungsbereich aus, wobei ein in dem Kupplungskörper gelagerter federvorgespannter Verriegelungsbolzen schräg zu einer festgelegten Aufnahmerichtung des Fanghakens derart auslenkbar ist, dass in entspanntem bzw. unbetätigtem Zustand ein an dem Verriegelungsbolzen angeordneter gerader Sperrabschnitt den Befestigungsbereich in einem gedachten Scheitelpunkt einer aufzunehmenden Kupplungskugel tangential überragt bzw. überschneidet. Der über den Scheitelpunkt hinausstehende Teil des Sperrabschnitts liegt der Kupplungskugel in der festgelegten Aufnahmerichtung im Weg und hält diese sicher im Fanghaken. Der entspannte bzw. unbetätigte Zustand des Verriegelungsbolzens entspricht hierbei einer vernachlässigbaren bzw. verhältnismäßig geringen Federvorspannung, die derart bemessen ist, dass der Verriegelungsbolzen innerhalb des Kupplungskörpers gegenüber ungewünschten vibrationsbedingten Bewegungen verlässlich gesichert ist.

Mit anderen Worten bildet der Fanghaken zur formschlüssigen Aufnahme der Kupplungskugel einen mit dieser komplementär ausgebildeten Befestigungsbereich. Der Befestigungsbereich stellt dabei - bis auf eine aus Gründen der Schmutztoleranz vorzusehendes Lagerspiel - ein Abbild einer gedachten Außenhülle der Kupplungskugel dar. Zur Zentrierung der Kupplungskugel weist der Fanghaken einen maulförmigen Aufnahmebereich auf, der in den eigentlichen Befestigungsbereich übergeht. Durch den Öffnungsverlauf des Fanghakens im Befestigungsbereich wird die Kupplungskugel entlang der festgelegten Aufnahmerichtung geführt.

Ferner ist es denkbar, dass die Auslenkungsrichtung des Verriegelungsbolzens in einem Winkel von 20 bis 40 Grad gegenüber der festgelegten Aufnahmerichtung des Fanghakens verläuft. Dieser Winkelbereich ist ideal für die Verwirklichung eines Schnappverschlusses, da dann beim Einführen einer Kupplungskugel in den Fanghaken auf den Verriegelungsbolzen überwiegend in dessen Auslenkungsrichtung bzw. in Richtung der Federvorspannung orientierte Kraftkomponenten einwirken. Dies stellt sicher, dass der Verschlussriegel von der Kupplungskugel verkantungsfrei weggeschoben wird.

Sobald die Kupplungskugel ihre endgültige Lage eingenommen hat, kehrt der Verriegelungsbolzen unter der Wirkung der Federvorspannung von selbst in seine die Kupplungskugel arretierende Ausgangslage zurück.

Auf einer Unterseite des Kupplungskörpers kann ein als Verlängerung des Verriegelungsbolzens ausgebildetes Griffstück hervorstehen. Dieses erlaubt es, den Verriegelungsbolzen aus seinem entspannten Zustand zum Zwecke der Entriegelung des Fanghakens aus dem Kupplungskörper herauszuziehen.

Der Verriegelungsbolzen kann einen runden Querschnitt aufweisen. In diesem Fall ist in dem Kupplungskörper eine hiermit korrespondierende Bohrung als Gleitpassung ausgebildet. Um ein unerwünschtes Verdrehen des Verriegelungsbolzens innerhalb der Gleitpassung zu unterbinden, kann an einer Außenkontur des Verriegelungsbolzens mindestens ein Vorsprung ausgeformt sein, der in eine entlang der Gleitpassung in Auslenkungsrichtung des Verriegelungsbolzens komplementär ausgeformte Einbuchtung eingreift.

Hierbei kann sowohl der Verriegelungsbolzen als auch die Gleitpassung einen stufenförmigen Querschnittsverlauf derart aufweisen, dass gegenüberliegende Anschläge für eine die Federvorspannung aufbringende Druckfeder gebildet werden. Zur Montage des Verschlussmechanismus wird zunächst die Druckfeder auf den Verriegelungsbolzen aufgesteckt, danach wird der so gebildete Zusammenbau auf der dem maulförmigen Aufnahmebereich des Fanghakens zugewandten Oberseite des Kupplungskörpers in die Gleitpassung eingeführt sowie im Bereich des auf der Unterseite austretenden Griffstücks mittels eines Befestigungselements gegen Herausfallen gesichert.

An den geraden Sperrabschnitt kann sich ein konkaver Halteabschnitt zur formschlüssigen Anlage an einer von dem Befestigungsbereich aufzunehmenden Kupplungskugel anschließen. Der konkave Halteabschnitt ermöglicht es, die Kupplungskugel innerhalb des Fanghakens derart einzuspannen, dass vibrationsbedingte Bewegungen innerhalb des Fanghakens weitegehend ausgeschlossen werden.

Der erfindungsgemäße Dreipunkt-Kraftheber eines landwirtschaftlichen Traktors mit einem Unterlenker wird im Folgenden anhand der beigefügten Zeichnungen näher erläutert. Dabei beziehen sich identische Bezugszeichen auf übereinstimmende oder bezüglich ihrer Funktion vergleichbare Komponenten. Es zeigen:
- Fig. 1: ein Ausführungsbeispiel des erfindungsgemäßen Unterlenkers,
- Fig. 2: eine im Schnitt dargestellte Seitenansicht einer an dem Unterlenker vorgesehenen Kupplungseinrichtung zur Arretierung einer Kupplungskugel mit einem in verriegeltem Zustand befindlichen Verschlussmechanismus,
- Fig. 3: eine im Schnitt dargestellte Seitenansicht der Kupplungseinrichtung gemäß Fig. 2 mit in entriegeltem Zustand befindlichen Verschlussmechanismus,
- Fig. 4: eine im Schnitt dargestellte Aufsicht auf die Kupplungseinrichtung gemäß Fig. 2,
- Fig. 5: eine Aufsicht auf einen von der Kupplungseinrichtung umfassten Kupplungskörper gemäß Fig. 2 bei demontiertem Verschlussmechanismus, und
- Fig. 6: ein Ausführungsbeispiel eines an die Verwendung mit dem erfindungsgemäßen Unterlenker gemäß Fig. 1 angepassten Trägerelements zur Anbringung an einem landwirtschaftlichen Traktor.

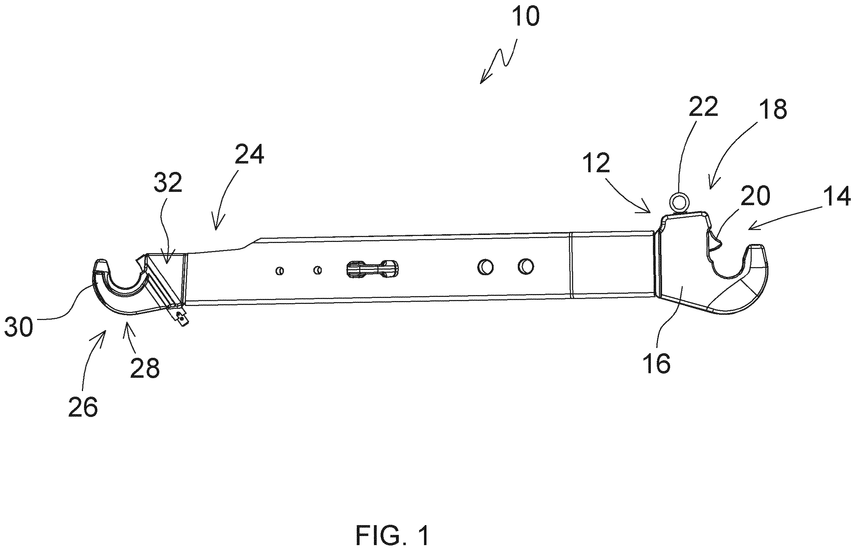

Fig. 1 zeigt ein Ausführungsbeispiel des erfindungsgemäßen Unterlenkers für einen nicht dargestellten Dreipunkt-Kraftheber eines landwirtschaftlichen Traktors.

Der als Stahlschmiede- und/oder Schweißteil hergestellte Unterlenker 10 umfasst eine an einem ersten Unterlenkerende 12 angeordnete erste Kupplungseinrichtung 14 zur Anbringung einer Anbaugeräteschnittstelle. Die erste Kupplungseinrichtung 14 ist als herkömmlicher Kupplungshaken 16 mit einem von Hand zu bedienenden Schnappverschluss 18 ausgebildet, der der Aufnahme einer von der Anbaugeräteschnittstelle umfassten Kupplungskugel dient. Der Schnappverschluss 18 weist einen federbelasteten Verschlussriegel 20 auf, der sich zur Freigabe des Kupplungshakens 16 durch manuelles Herausziehen eines an einer Oberseite des Kupplungshakens 16 vorgesehenen Betätigungselements 22 in eine eingezogene Stellung verbringen lässt. Aufbau und Funktion eines derartigen Kupplungshakens 16 sind hinlänglich bekannt, sodass an dieser Stelle nicht weiter darauf eingegangen werden soll.

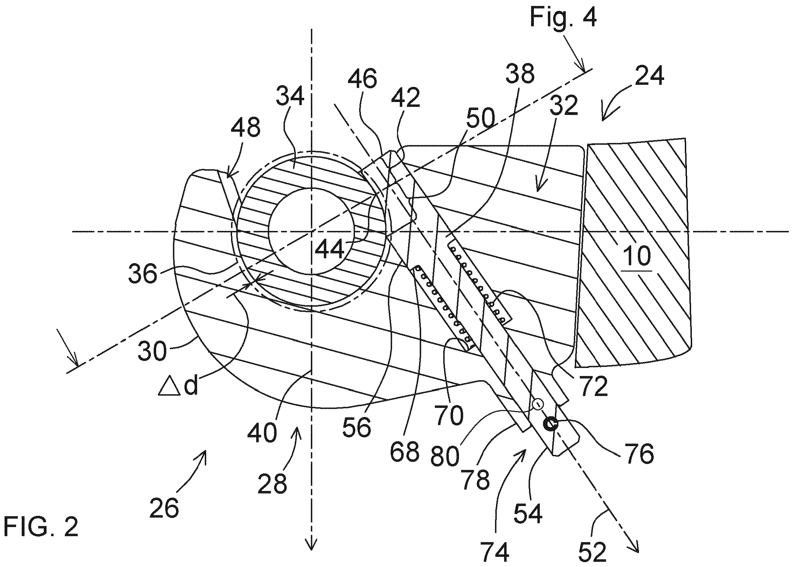

Des Weiteren ist eine an einem zweiten Unterlenkerende 24 angeordnete zweite Kupplungseinrichtung 26 zur Anbringung einer traktorseitigen Anlenkstelle des Dreipunkt-Krafthebers vorhanden. Die zweite Kupplungseinrichtung 26 weist einen Kupplungskörper 28 mit einem Fanghaken 30 und einem in Fig. 2 im Detail wiedergegebenen Verschlussmechanismus 32 auf, der der lösbaren Arretierung einer der traktorseitigen Anlenkstelle zugeordneten Kupplungskugel innerhalb des Fanghakens 30 dient.

Wie in Fig. 2 zu erkennen ist, bildet der Fanghaken 30 einen zur formschlüssigen Aufnahme einer zugehörigen Kupplungskugel 34 vorgesehenen Befestigungsbereich 36 aus. Ein in dem Kupplungskörper 28 gelagerter federvorgespannter Verriegelungsbolzen 38 ist schräg zu einer festgelegten Aufnahmerichtung 40 des Fanghakens 30 derart auslenkbar, dass in entspanntem bzw. unbetätigtem Zustand ein an dem Verriegelungsbolzen 38 angeordneter gerader Sperrabschnitt 42 den Befestigungsbereich 36 in einem Scheitelpunkt 44 der Kupplungskugel 34 tangential überragt bzw. überschneidet. Der über den Scheitelpunkt 44 hinausstehende Teil 46 des geraden Sperrabschnitts 42 liegt der Kupplungskugel 34 in der festgelegten Aufnahmerichtung 40 im Weg und hält diese sicher im Fanghaken 30. Der entspannte bzw. unbetätigte Zustand des Verriegelungsbolzens 38 entspricht hierbei einer vernachlässigbaren bzw. verhältnismäßig geringen Federvorspannung, die derart bemessen ist, dass der Verriegelungsbolzen 38 innerhalb des Kupplungskörpers 28 gegenüber ungewünschten vibrationsbedingten Bewegungen verlässlich gesichert ist.

Mit anderen Worten bildet der Fanghaken 30 zur formschlüssigen Aufnahme der Kupplungskugel 34 einen mit dieser komplementär ausgebildeten Befestigungsbereich 36. Der Befestigungsbereich 36 stellt dabei - bis auf eine aus Gründen der Schmutztoleranz vorzusehendes Lagerspiel Δd im Bereich von 2 bis 3 mm - ein Abbild einer gedachten Außenhülle der Kupplungskugel 34 dar. Zur Zentrierung der Kupplungskugel 34 weist der Fanghaken 30 einen maulförmigen Aufnahmebereich 48 auf, der in den eigentlichen Befestigungsbereich 36 übergeht. Durch den Öffnungsverlauf des Fanghakens 30 im Befestigungsbereich 36 wird die Kupplungskugel 34 entlang der festgelegten Aufnahmerichtung 40 geführt.

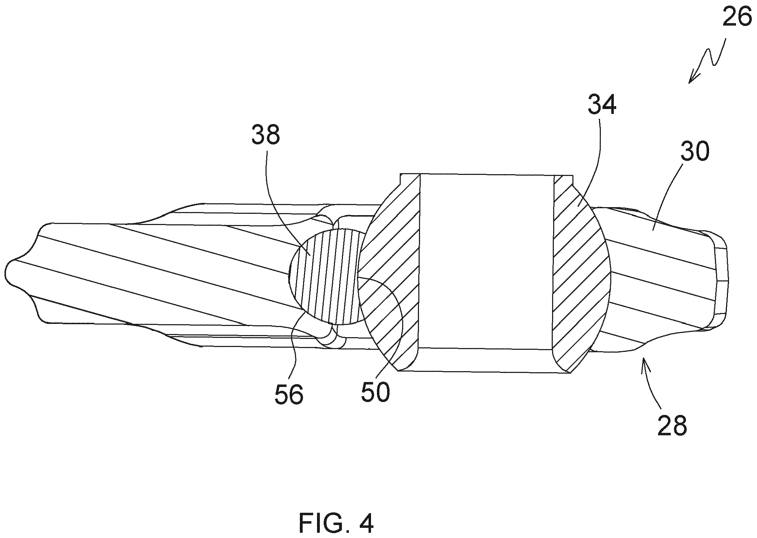

Entsprechend der im Schnitt dargestellten Aufsicht auf die zweite Kupplungseinrichtung 26 in Fig. 4 schließt sich an den geraden Sperrabschnitt 42 ein konkaver Halteabschnitt 50 zur formschlüssigen Anlage an einer von dem Befestigungsbereich 36 aufzunehmenden Kupplungskugel 34 an. Der konkave Halteabschnitt 50 spannt die Kupplungskugel 34 innerhalb des Fanghakens 30 unter der Wirkung der Federvorspannung derart ein, dass vibrationsbedingte Bewegungen innerhalb des Fanghakens 30 weitegehend ausgeschlossen werden.

Gemäß Fig. 1 weist sowohl der Kupplungshaken 16 der ersten Kupplungseinrichtung 14 wie auch der Fanghaken 30 der zweiten Kupplungseinrichtung 26 einen im Betrieb nach oben gerichteten Öffnungsverlauf auf. Grundsätzlich ist es jedoch auch vorstellbar, dass der Öffnungsverlauf des Fanghakens 30 der zweiten Kupplungseinrichtung 26 entgegengesetzt ist. Der Unterlenker 10 ist dann von oben in die traktorseitige Anlenkstelle des Dreipunkt-Krafthebers einzuhängen.

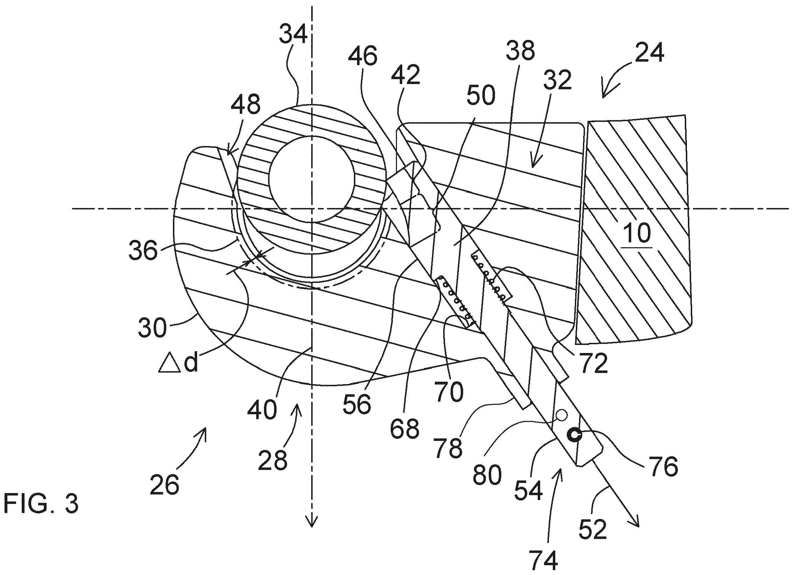

Zur Verwirklichung eines Schnappverschlusses verläuft die Auslenkungsrichtung 52 des Verriegelungsbolzens 38 idealerweise in einem Winkel von 20 bis 40 Grad gegenüber der festgelegten Aufnahmerichtung 40 des Fanghakens 30, beispielsgemäß in einem Winkel von etwa 30 Grad. Wie aus Fig. 3 ersichtlich ist, wirken dann beim Einführen der Kupplungskugel 34 in den Fanghaken 30 auf den Verriegelungsbolzen 38 überwiegend in dessen Auslenkungsrichtung 52 bzw. in Richtung der Federvorspannung orientierte Kraftkomponenten ein. Dies stellt sicher, dass der Verschlussriegel 20 von der Kupplungskugel 34 verkantungsfrei weggeschoben wird. Sobald die Kupplungskugel 34 ihre endgültige Lage eingenommen hat, kehrt der Verriegelungsbolzen 38 unter der Wirkung der Federvorspannung von selbst in seine die Kupplungskugel 34 arretierende Ausgangslage zurück.

Auf einer Unterseite des Kupplungskörpers 28 steht ein als Verlängerung des Verriegelungsbolzens 38 ausgebildetes Griffstück 54 hervor. Dieses erlaubt es, den Verriegelungsbolzen 38 aus seinem entspannten Zustand zum Zwecke der Entriegelung des Fanghakens 30 aus dem Kupplungskörper 28 herauszuziehen (siehe Fig. 3).

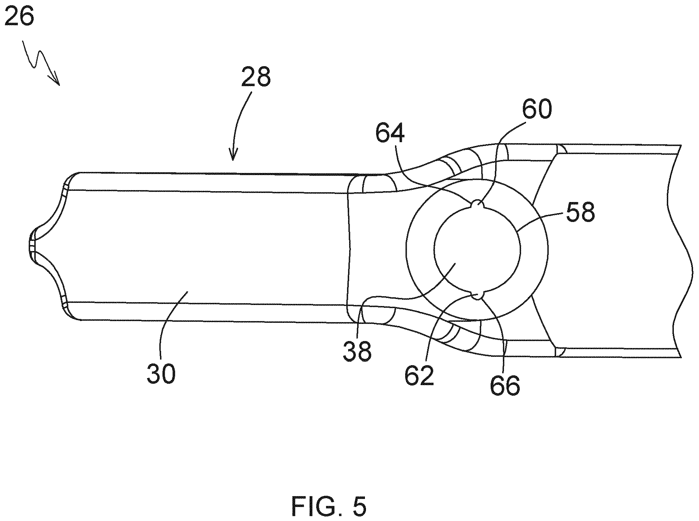

Der Verriegelungsbolzen 38 weist einen in Fig. 5 wiedergegebenen runden Querschnitt auf. In dem Kupplungskörper 28 ist eine hiermit korrespondierende Bohrung als Gleitpassung 56 ausgebildet. Um ein unerwünschtes Verdrehen des Verriegelungsbolzens 38 innerhalb der Gleitpassung 56 zu unterbinden, sind an einer Außenkontur 58 des Verriegelungsbolzens 38 gegenüberliegende Vorsprünge 60, 62 ausgeformt, die in entlang der Gleitpassung 56 in Auslenkungsrichtung 52 des Verriegelungsbolzens 38 komplementär ausgeformte Einbuchtungen 64, 66 eingreifen.

Sowohl der Verriegelungsbolzen 38 als auch die Gleitpassung 56 weisen einen stufenförmigen Querschnittsverlauf derart auf, dass gegenüberliegende Anschläge 68, 70 für eine die Federvorspannung aufbringende Druckfeder 72 gebildet werden (siehe Fig. 2). Zur Montage des Verschlussmechanismus 32 wird zunächst die Druckfeder 72 auf den Verriegelungsbolzen 38 aufgesteckt, danach wird der so gebildete Zusammenbau auf der dem maulförmigen Aufnahmebereich 48 des Fanghakens 30 zugewandten Oberseite des Kupplungskörpers 28 in die Gleitpassung 56 eingeführt sowie im Bereich des auf der Unterseite austretenden Griffstücks 54 mittels eines Befestigungselements 74 gegen Herausfallen gesichert. Bei dem Befestigungselement 74 handelt es sich um einen am Griffstück 54 hindurchgesteckten Sicherungssplint 76, der in entspanntem Zustand des Verriegelungsbolzens 38 an einem am Kupplungskörper 28 ausgeformten Fortsatz 78 stirnseitig anliegt.

Weiterhin ist im Bereich des Griffstücks 54 eine Bohrung 80 vorgesehen, die in entspanntem bzw. unbetätigten Zustand des Verriegelungsbolzens 38 mit einer in dem Fortsatz 78 ausgebildeten Gegenbohrung fluchtet. Dies erlaubt das Hindurchstecken eines (nicht gezeigten) Sicherungsbolzens, sodass sich der Verriegelungsbolzen 38 mechanisch arretieren lässt.

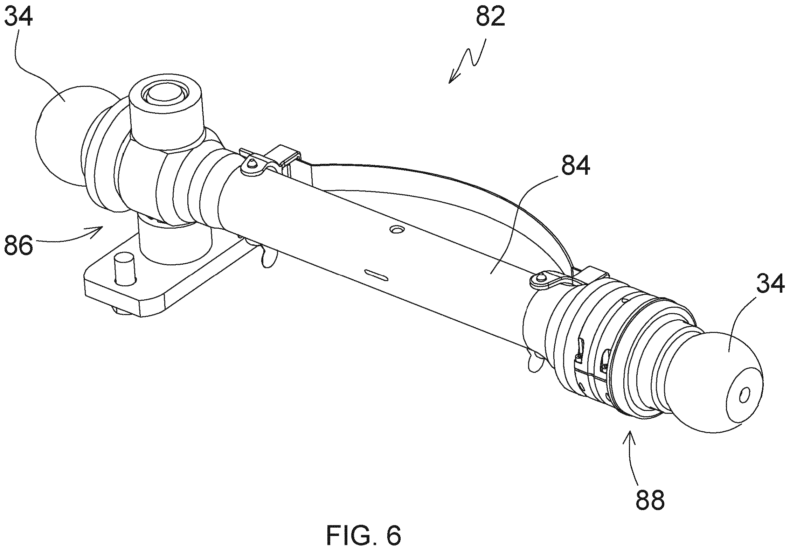

Fig. 6 gibt ein Ausführungsbeispiel eines an die Verwendung mit dem erfindungsgemäßen Unterlenker 10 angepassten Trägerelements 80 zur Anbringung an einem landwirtschaftlichen Traktor wieder. Das an einem Hinterachsdifferentialgehäuse des landwirtschaftlichen Traktors anzuflanschende Trägerelement 80 weist eine zentrale Trägerachse 82 auf, an deren stirnseitigen Enden 84, 86 einstückig ausgeformte Kupplungskugeln 34 zur Anbringung eines jeweiligen Unterlenkers 10 bzw. des von diesem umfassten Fanghakens 30 vorgesehen sind.

## Patentansprüche

1. Dreipunkt-Kraftheber eines landwirtschaftlichen Traktors mit einem Unterlenker, umfassend eine an einem ersten Unterlenkerende (12) angeordnete erste Kupplungseinrichtung (14) zur Anbringung einer Anbaugeräteschnittstelle und eine an einem zweiten Unterlenkerende (24) angeordnete zweite Kupplungseinrichtung (26) zur Anbringung einer traktorseitigen Anlenkstelle des Dreipunkt-Krafthebers, wobei die zweite Kupplungseinrichtung (26) einen Kupplungskörper (28) mit einem Fanghaken (30) und einem Verschlussmechanismus (32) aufweist, **dadurch gekennzeichnet, dass** mittels des Verschlussmechanismus (32) innerhalb des Fanghakens (30) eine der traktorseitigen Anlenkstelle des Dreipunkt-Krafthebers zugeordnete Kupplungskugel (34) lösbar arretiert ist.

2. Dreipunkt-Kraftheber nach Anspruch 1, **dadurch gekennzeichnet, dass** der Fanghaken (30) einen zur formschlüssigen Aufnahme der Kupplungskugel (34) vorgesehenen Befestigungsbereich (36) ausbildet, wobei ein in dem Kupplungskörper (28) gelagerter federvorgespannter Verriegelungsbolzen (38) schräg zu einer festgelegten Aufnahmerichtung (40) des Fanghakens (30) derart auslenkbar ist, dass in unbetätigtem Zustand ein an dem Verriegelungsbolzen (38) angeordneter gerader Sperrabschnitt (42) den Befestigungsbereich (36) in einem gedachten Scheitelpunkt (44) einer aufzunehmenden Kupplungskugel (34) tangential überragt.

3. Dreipunkt-Kraftheber nach Anspruch 2, **dadurch gekennzeichnet, dass** die Auslenkungsrichtung (52) des Verriegelungsbolzens (38) in einem Winkel von 20 bis 40 Grad gegenüber der festgelegten Aufnahmerichtung (40) des Fanghakens (30) verläuft.

4. Dreipunkt-Kraftheber nach Anspruch 2 oder 3, **dadurch gekennzeichnet, dass** auf einer Unterseite des Kupplungskörpers (28) ein als Verlängerung des Verriegelungsbolzens (38) ausgebildetes Griffstück (54) hervorsteht.

5. Dreipunkt-Kraftheber nach wenigstens einem der Ansprüche 2 bis 4, **dadurch gekennzeichnet, dass** der Verriegelungsbolzen (38) einen runden Querschnitt aufweist.

6. Dreipunkt-Kraftheber nach Anspruch 5, **dadurch gekennzeichnet, dass** in dem Kupplungskörper (28) eine mit dem runden Querschnitt korrespondierende Bohrung als Gleitpassung (56) ausgebildet ist, wobei sowohl der Verriegelungsbolzen (38) als auch die Gleitpassung (56) einen stufenförmigen Querschnittsverlauf derart aufweist, dass gegenüberliegende Anschläge (68, 70) für eine die Federvorspannung aufbringende Druckfeder (72) gebildet werden.

7. Dreipunkt-Kraftheber nach Anspruch 6, **dadurch gekennzeichnet, dass** an einer Außenkontur (58) des Verriegelungsbolzens (38) mindestens ein Vorsprung (60, 62) ausgeformt ist, der in eine entlang der Gleitpassung (56) in Auslenkungsrichtung (52) des Verriegelungsbolzens (38) komplementär ausgeformte Einbuchtung (64, 66) eingreift.

8. Dreipunkt-Kraftheber nach wenigstens einem der Ansprüche 2 bis 7, **dadurch gekennzeichnet, dass** sich an den geraden Sperrabschnitt (42) ein konkaver Halteabschnitt (50) zur formschlüssigen Anlage an einer von dem Befestigungsbereich (36) aufzunehmenden Kupplungskugel (34) anschließt.

9. Trägerelement zur Verwendung mit einem Dreipunkt-Kraftheber nach wenigstens einem der vorhergehenden Ansprüche, **gekennzeichnet durch** eine zentrale Trägerachse (82), an deren stirnseitigen Enden (84, 86) einstückig ausgeformte Kupplungskugeln (34) zur Anbringung des Unterlenkers (10) vorgesehen sind.

## Claims

1. Three-point power-lift linkage of an agricultural tractor, having a lower link, comprising a first coupling device (14), disposed on a first lower link end (12), for attaching an attachment apparatus interface, and a second coupling device (26), disposed on a second lower link end (24), for attaching an articulation point of the three-point power-lift linkage on the tractor, wherein the second coupling device (26) has a coupling body (28) with a catch hook (30) and a closure mechanism (32), **characterized in that** a coupling ball (34) assigned to the articulation point of the three-point power-lift linkage on the tractor is releasably locked within the catch hook (30) by means of the closure mechanism (32).

2. Three-point power-lift linkage according to Claim 1, **characterized in that** the catch hook (30) forms a fastening region (36) provided for receiving the coupling ball (34) in a form-fitting manner, wherein a locking bolt (38) which is mounted so as to be spring preloaded in the coupling body (28) is deflectable obliquely to an established receiving direction (40) of the catch hook (30) in such a manner that, in the non-activated state, a straight blocking portion (42) disposed on the locking bolt (38) protrudes tangentially beyond the fastening region (36) in an imaginary apex (44) of a coupling ball (34) to be received.

3. Three-point power-lift linkage according to Claim 2, **characterized in that** the deflection direction (52) of the locking bolt (38) runs at an angle of 20 to 40 degrees in relation to the established receiving direction (40) of the catch hook (30).

4. Three-point power-lift linkage according to Claim 2 or 3, **characterized in that** a gripping piece (54) formed as an extension of the locking bolt (38) projects on a lower side of the coupling body (28).

5. Three-point power-lift linkage according to at least one of Claims 2 to 4, **characterized in that** the locking bolt (38) has a round cross section.

6. Three-point power-lift linkage according to Claim 5, **characterized in that** formed as a sliding fit (56) in the coupling body (28) is a bore corresponding to the round cross section, wherein both the locking bolt (38) and the sliding fit (56) have a step-shaped cross-sectional profile in such a manner that opposite stops (68, 70) are formed for a compression spring (72) applying the spring preload.

7. Three-point power-lift linkage according to Claim 6, **characterized in that** at least one projection (60, 62) is formed on an external contour (58) of the locking bolt (38), which engages in a concavity (64, 66) moulded in a complementary manner along the sliding fit (56) in the deflection direction (52) of the locking bolt (38).

8. Three-point power-lift linkage according to at least one of Claims 2 to 7, **characterized in that** a concave retaining portion (50) for resting in a form-fitting manner on a coupling ball (34) to be received by the fastening region (36) adjoins the straight blocking portion (42).

9. Carrier element for use with a three-point power-lift linkage according to at least one of the preceding claims, **characterized by** a central carrier axle (82) on the front ends (84, 86) of which are provided integrally moulded coupling balls (34) for attaching the lower link (10).

## Revendications

1. Attelage à trois points d'un tracteur agricole avec un bras inférieur, comprenant un premier dispositif d'accouplement (14) agencé sur une première extrémité de bras inférieur (12) pour le montage d'une interface d'outil porté et un deuxième dispositif d'accouplement (26) agencé sur une deuxième extrémité de bras inférieur (24) pour le montage d'un point d'articulation côté tracteur de l'attelage à trois points, le deuxième dispositif d'accouplement (26) présentant un corps d'accouplement (28) avec un crochet d'arrêt (30) et un mécanisme de fermeture (32), **caractérisé en ce qu'**au moyen du mécanisme de fermeture (32), une sphère d'accouplement (34) associée au point d'articulation côté tracteur de l'attelage à trois points est bloquée de manière amovible à l'intérieur du crochet d'arrêt (30).

2. Attelage à trois points selon la revendication 1, **caractérisé en ce que** le crochet d'arrêt (30) réalise une zone de fixation (36) prévue pour recevoir par complémentarité de forme la sphère d'accouplement (34), un boulon de verrouillage (38) précontraint par ressort logé dans le corps d'accouplement (28) pouvant être dévié en oblique par rapport à une direction de réception (40) fixée du crochet d'arrêt (30) de telle sorte qu'à l'état non actionné, une section de blocage droite (42) agencée sur le boulon de verrouillage (38) dépasse tangentiellement la zone de fixation (36) en un sommet imaginaire (44) d'une sphère d'accouplement (34) à recevoir.

3. Attelage à trois points selon la revendication 2, **caractérisé en ce que** la direction de déviation (52) du boulon de verrouillage (38) s'étend selon un angle de 20 à 40 degrés par rapport à la direction de réception fixée (40) du crochet d'arrêt (30).

4. Attelage à trois points selon la revendication 2 ou 3, **caractérisé en ce que** sur un côté inférieur du corps d'accouplement (28) fait saillie une pièce de préhension (54) réalisée sous forme de prolongement du boulon de verrouillage (38).

5. Attelage à trois points selon au moins l'une quelconque des revendications 2 à 4, **caractérisé en ce que** le boulon de verrouillage (38) présente une section transversale ronde.

6. Attelage à trois points selon la revendication 5, **caractérisé en ce qu'**un alésage correspondant à la section transversale ronde est réalisé dans le corps d'accouplement (28) en tant qu'ajustement glissant (56), le boulon de verrouillage (38) et l'ajustement glissant (56) présentant tous deux un tracé de section transversale en gradins de telle sorte que des butées opposées (68, 70) sont formées pour un ressort de compression (72) appliquant la précontrainte de ressort.

7. Attelage à trois points selon la revendication 6, **caractérisé en ce qu'**au moins une saillie (60, 62) est formée sur un contour extérieur (58) du boulon de verrouillage (38), qui s'engage dans un renfoncement (64, 66) formé de manière complémentaire le long de l'ajustement coulissant (56) dans la direction de déviation (52) du boulon de verrouillage (38).

8. Attelage à trois points selon au moins l'une quelconque des revendications 2 à 7, **caractérisé en ce que** la section de blocage droite (42) est suivie d'une section de retenue concave (50) destinée à venir en appui par complémentarité de forme sur une sphère d'accouplement (34) à recevoir par la zone de fixation (36).

9. Élément de support destiné à être utilisé avec un attelage à trois points selon au moins l'une quelconque des revendications précédentes, **caractérisé par** un axe central de support (82) aux extrémités frontales (84, 86) duquel sont prévues des sphères d'accouplement (34) formées d'un seul tenant pour le montage du bras inférieur (10).
